# EUROPÄISCHE PATENTSCHRIFT

(11) **EP 2 446 174 B1**
(45) Veröffentlichungstag und Bekanntmachung des Hinweises auf die Patenterteilung: **24.04.2013**
(21) Anmeldenummer: 10739483.5
(22) Anmeldetag: 15.06.2010
(51) Int. Cl.: F16H 63/38, G05G 5/06

(54) **RASTIERVORRICHTUNG FÜR EINE SCHALTWELLE**
LOCKING DEVICE FOR A SELECTOR SHAFT
DISPOSITIF DE BLOCAGE POUR UN ARBRE DE CHANGEMENT DE VITESSE

(30) Priorität: 26.06.2009 DE 102009030823
(43) Veröffentlichungstag der Anmeldung: 02.05.2012
(73) Patentinhaber: Koki Technik Transmission Systems GmbH, 09399 Niederwürschnitz (DE)
(72) Erfinder: QUINGER, Torsten, 09419 Herold (DE); HENDEL, Mathias, 08412 Werdau (DE)
(74) Vertreter: Weiss, Peter
(86) Internationale Anmeldenummer: PCT/EP2010/003587
(87) Internationale Veröffentlichungsnummer: WO 2010/149295

(56) Entgegenhaltungen:
- DE-A1- 10 260 166
- DE-A1-102005 034 864
- DE-A1-102007 060 577
- US-A- 4 722 237

## Beschreibung

### TECHNSCHES GEBIET

Die vorliegende Erfindung betrifft eine Rastiervorrichtung nach dem Oberbegriff des Anspruchs 1 und eines Verfahrens nach Anspruch 7.

### Stand der Technik

Aus dem Stand der Technik wird auf die US gattungsgemäße 4,722,237 A hingewiesen. Dort ist eine Rastiervorrichtung für ein Schaltgetriebe offenbart.

Weiter wird auf die DE 10 2005 034 864 A1 verwiesen, welche eine Stellvorrichtung für ein Getriebe offenbart.

Ausserdem wird In diesem Zusammenhang auf die DE 10 2007 060 577 A1 hingewiesen. Dort ist eine Sensorschalteinheit beschrieben, welche zur Bestimmung von Stellungen eines Getriebes dient.

Der Vollständigkeit halber wird auch auf die DE 102 60 166 A1 verwiesen.

Rastiervorrichtungen werden in Schaltgetrieben zur kraftschlüssigen Arretierung der Schaltpositionen "Neutral" und "eingelegter Gang" eingesetzt. Dazu weisen herkömmliche Systeme eine so genannte M-Kontur auf, die mittels eines federkraftbeaufschlagten Rastelementes beide Arretierfunktionen abdeckt.

Zur Rückführung der Schaltwelle innerhalb der Neutralgasse in die Grundstellung, vorzugsweise in die Schaltgasse 3./4. Gang werden entweder Federsysteme eingesetzt oder wiederum Rampenkonturen, die mittels eines federkraftbeaufschlagten Rastelementes die Rückstellkraft erzeugen. Diese Rampenkonturen sind entweder als separate Kontur oder in Kombination mit einer M-Kontur ausgeführt.

Die Herstellbarkeit dieser M-Konturen an den entsprechenden Rastierungshülsen ist jedoch aufgrund der Oberflächenstruktur mit den sich ergebenden kleinen Radien und engen Übergängen von Außen- und Innenradien begrenzt. Aus diesem Grund ergeben sich auch Zwänge in der Auslegung dieser M-Konturen, die zu begrenzten Gradienten im Verlauf der Schaltkraft über dem Schaltweg bzw. im Verlauf des Schaltmomentes über dem Schaltwinkel führen.

Diese M-Konturen sind jedoch für eine sensorische Abtastung zum Zwecke der Schaltpositionsdetektierung ungeeignet, da sich aus der Oberflächenstruktur aufgrund der sich überdeckenden Höhen der Schaltpositionen "Neutral" und "eingelegter Gang" keine eindeutige Codierung ableiten lässt.

Rastelemente mit integrierter Schaltfunktion sind in vielfältigen Ausführungen gebräuchlich. In Erweiterung dessen wurden Rastelemente mit integrierter Wegsensorik entwickelt, die anhand des Hubes der Rastelemente die Höhe der in Wirkverbindung stehenden Kontur messen können.

### Aufgabe

Aufgabe der vorliegenden Erfindung ist es, eine Rastierhülse zu schaffen, die die Funktionen Arretierung der Schaltpositionen "Neutral" und "eingelegter Gang" in bewährter Weise erfüllt und wesentlich einfacher herstellbar ist. Zudem sollen vorzugsweise bei einer solchen Rastierhülse mittels eines geeigneten Verfahrens eine eindeutige Bestimmung der Schaltpositionen "Neutral" und der eingelegten Gänge 1 bis n und R möglich sein.

### Lösung der Aufgabe

Zur Lösung der Aufgabe führt der kennzeichnende Teil des Anspruchs 1 und des Anspruchs 7.

Bevorzugt umfasst die Schaltkontur dabei eine erste Teilschaltkontur und eine zweite Teilschaltkontur. Dabei steht mit der ersten Teilschaltkontur das erste und mit der zweiten Teilschaltkontur das zweite Rastelement in Wirkverbindung. Vorzugsweise sind die Rastelemente dazu mit einem Federelement federkraftbeaufschlagt.

Vorzugsweise sind die Teilschaltkonturen um einen beliebigen Winkel radial versetzt, bevorzugt zwischen 90° und 270°, noch bevorzugter zwischen 150° und 210°. Sie sind vorteilhafterweise auf im Wesentlichen gleicher axialer Höhe, insbesondere auf einer Hülse od. dgl. angeordnet. Dabei ist vom Erfindungsgedanken auch umfasst, dass die Teilschaltkonturen auf unterschiedlichen Hülsen angeordnet sind. Ebenfalls kann die Schaltkontur aus zwei neben- oder hintereinander liegenden Teilschaltkonturen ausgeführt sein. Auch die Ausbildung einer Schaltkontur, der zwei Rastelemente zugeordnet sind, ist vom Erfindungsgedanken umfasst.

Dabei wird die Funktion "Arretierung der Schaltposition Neutral" ganz oder teilweise von der ersten Teilschaltkontur als Neutralrastierkontur und dem dazugehörigen ersten Rastelement in einer Neutralrastierung übernommen.

Die Funktion "Arretierung der Schaltposition eingelegter Gang" wird von der zweiten Teilschaltkontur als Gangrastierkontur und dem zweiten Rastelement übernommen.

Weiterhin wird mit den beiden Wirkverbindungen die Möglichkeit geschaffen, gezielt die jeweiligen Einzelschaltkraft- bzw. Schaltmomentverläufe zu überlagern, was für eine weitere Vereinfachung der Teilschaltkonturen und einen erhöhten Schaltkomfort genutzt werden kann.

Grundsätzlich stehen die Rastelemente so miteinander in Wirkverbindung, dass sie, bspw. bei einem Schaltvorgang gekoppelte Bewegungen ausführen.

Die Wirkverbindung der Rastelemente erfolgt so, dass entsprechend der Ausbildung der Teilschaltkonturen Wählbewegungen translatorisch und die Schaltbewegungen rotatorisch oder bei entgegengesetzter Ausbildung die Wälbewegungen rotatorisch und die Schaltbewegungen translatorisch ausgeführt werden.

Ausserdem können die beiden Teilschaltkonturen so ausgebildet sein, dass die Rastelemente bei einer gekoppelten Bewegung an einer Teilschaltkontur entlang einer Steigung und an der entsprechenden anderen Teilschaltkontur entlang einem Gefälle laufen.

Einzelnen Schaltzuständen oder Gruppen von Schaltzuständen, die detektiert werden sollen, wird ein definierter Radius zugeordnet. Deshalb erfährt das Rastelement für einen bestimmten Schaltzustand einen definierten Hub. Dieser Hub des Rastelements wird zur Detektion des Schaltzustandes ermittelt. Dazu ist zumindest einem der Rastelemente ein Messelement zugeordnet. Vom Erfindungsgedanken soll auch umfasst sein, dass der Hub indirekt bestimmt wird, also ein Weg eines Bauteils das vom Rastelement umfasst wird. Zweckmässigerweise kann das Messelement, wenn es einem Federelement des Rastelements zugeordnet ist, bspw. die Federkraft des Federelements bei einer Schalt- und oder Wählbewegung messen und dadurch den Federweg und endlich den Hub des Rastelements bestimmen.

Zweckmässigerweise wird der Hub des Rastelements an der Neutralrastierkontur ermittelt. Denn diese weist in ihrer Mitte eine muldenförmige Vertiefung, eine sogenannte Neutralgasse auf, in der sich das Rastelement in einer Neutralposition befindet. Aus dieser Neutralgasse heraus kann das Rastelement bei einer Schalt- oder Wählbewegung entlang in Schaltgassen bewegt werden. In Schaltrichtung beschreiben die Schaltgassen auf der Neutralrastierkontur einen Anstieg, den das Rastelement beim Wähl- bzw. Schaltvorgang bis in einen Rastierbereich durchlaufen muss. Dadurch ergibt sich auf jeden Fall ein ausreichend grosser und somit gut detektierbarer Hub.

Der Rastierbereich ist in Unterbereiche unterteilt. Diese Unterbereiche können unabhängig voneinander, für jeden Schaltzustand einzeln auf der Schaltkontur, vorzugsweise der Neutralrastkontur angeordnet sein. Dabei weisen die einzelnen Unterbereiche, denen die einzelnen Gänge zugeordnet sind, definierte Radien oder Abstände auf. Dadurch erfährt das Rastelement je nach gewähltem Gang bzw. Schaltzustand jeweils einen definierten Hub. Dieser wird mit dem Messelement erfasst und über eine Auswerteelektronik zur Schaltpositionserkennung genutzt.

Um dabei ausreichend grosse Abstände zwischen den Schaltbereichen der eingelegten Gänge zu erreichen, werden die Höhen der Neutralpositionen der einzelnen Schaltgassen auf unterschiedliche Niveaus ausgelegt. Dazu dient eine in Wählrichtung orientierte Rampe. Diese Rampe wird gleichzeitig zu einer Wählrückführung bzw. als Gewichtsausgleich genutzt.

In einem erfindungsgemässen Ausführungsbeispiel sollen nur die Schaltzustände "neutral" und "R-Gang" detektiert werden. Um eine solche Detektierung zu realisieren, kann eine Rastierhülse, mit folgender Ausbildung eingesetzt werden.

Alle Neutralpositionen werden vorzugsweise in der Neutralgasse auf annähernd ein Niveau bzw. einen Radius gelegt. Auch allen Schaltgassen bzw. Schaltbereichen der Vorwärtsgänge 1 bis n werden vorzugsweise annähernd ähnliche Radien, ohne fest definierte Abstände zugeordnet.

Nur der Schaltbereich des Rückwärtsganges erhält einen Bereich mit einem Radius, der eine definierte Differenz zu den Radien der anderen Schaltbereiche aufweist. Vorzugsweise erhält dieser Bereich einen grösseren Radius, so dass die entsprechende Schaltgasse höher als die Schaltgassen der Gänge 1 bis n liegt und der Schaltbereich bzw. die Schaltgasse nur im Rückwärtsgang erreichbar ist. Dadurch ergibt sich eine eindeutige Abgrenzung für die Schaltbereiche "neutral" und "R-Gang".

Alternativ kann anstelle des Rastelements, dem ein Messelement zugeordnet ist, auch ein Rastelement mit einem Schalter, der den Zustand "gangrastiert" erkennt und mit zwei Kontaktpaaren (Schaltstellung "neutral" und "R-Gang") versehen ist, verwendet werden.

Dieses Ausführungsbeispiel ist vorzugsweise für Anwendungen, die an einen Schaltzustand gebunden sind, wie "Rückfahrscheinwerfer" und "Start-Stop-Automatik" einsetztbar.

In einem besonders bevorzugten Ausführungsbeispiel wird ein kompletter Neutralbereich ausserhalb, vorzugsweise unterhalb eines reservierten Höhenbereichs für eingelegte Gänge angeordnet. Damit wird der Neutralbereich innerhalb einer Wählgasse von der Auswerteelektronik sicher am gemessenen Hub erkannt.

Grundsätzlich ist es nicht vermeidbar, dass während einer Schalt- oder Wählbewegung bis der Rastierbereich erreicht ist, Höhen bzw. Radien vom Rastelement "durchlaufen" werden, die für andere Gänge reserviert bzw. diesen zugeordnet sind. Deshalb wird vorzugsweise erst mit der Auswertung bzw. Gangdetektierung begonnen, wenn sich das Rastelement im Rastierbereich der Schaltgasse befindet, in dem diese bereits einen konstanten, für diese Schaltgasse charakteristischen Radius aufweist.

Je nach Ausführungsbeispiel kann die Schaltkontur einen Rastierbereich aufweisen, der bspw. in einem bestimmten Schaltwinkelbereich liegt. Vom Erfindungsgedanken ist aber auch umfasst, jedem Schaltzustand einen eigenen unabhängigen Unterbereich des Rastierbereichs, nach konstruktiven, fertigungs- und/oder schalttechnischen Kriterien zuzuordnen.

Je nach Ausführungsbeispiel können unterschiedliche Indikatorgrössen anzeigen, dass sich das Rastelement auf dem Rastierbereich bzw. einem Unterbereich befindet. Geeignete Indikatorgrössen sind das Erreichen eines bestimmten Schaltwinkels oder das Gleichbleiben des Hubes des Rastelements innerhalb eines festgelegten Zeitintervalls.

In einem weiteren bevorzugten Ausführungsbeispiel wird einem der Rastelemente, bevorzugt dem Rastelement der Gangrastierung, ein Schalter zugeordnet, der einen Indikator-Schaltzustand annimmt, wenn ein Schaltzustand der Rastiervorrichtung rastiert ist. Dazu weist auch die Gangrastierkontur einen Bereich mit einem definierten Radius zum Auslösen des Indikatorschaltzustandes auf, der gegenüber der Neutralrastierkonur so angeordnet ist, dass sich das zweite Rastelement auf diesem befindet, wenn sich das erste Rastelement auf dem Rastierbereich bzw. einem der Unterbereiche auf der Neutralrastierkontur befindet.

Zur Erfassung des Indikator-Schaltzustands sind verschiedene Sensoren, Schalter oder Wegaufnehmer, wie induktive, mechanische, elektrische oder optische vorteilhaft. Die Vorteile sind bspw. berührungslose Messung, einfacher Aufbau oder günstige Herstellung.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- **Figur 1**: eine Prinzipdarstellung eines erfindungsgemässen Ausführungsbeispiels einer Rastiervorrichtung eines Schaltgetriebes;
- **Figur 2**: eine Darstellung von Verläufen eines Hubes der Rastiervorrichtung gemäss Figur 1;
- **Figur 3**: eine Prinzipdarstellung eines weiteren erfindungsgemässen Ausführungsbeispiels einer Rastiervorrichtung eines Schaltgetriebes;
- **Figur 4**: eine Darstellung von Verläufen eines Hubes der Rastiervorrichtung gemäss Figur 3;
- **Figur 5**: eine Darstellung von Verläufen eines Hubes eines weiteren erfindungsgemässen Ausführungsbeispiels einer Rastiervorrichtung;
- **Figur 6**: eine perspektivische Ansicht des erfindungsgemässes Ausführungsbeispiels einer Schaltwelle mit Rastierungshülse gemäss der Prinzipdarstellung in Figur 1;
- **Figur 7**: eine weitere perspektivische Ansicht der Schaltwelle gemäss Figur 6;
- **Figur 8**: eine Vorderansicht der Schaltwelle gemäss Figur 6;
- **Figur 9**: eine Draufsicht der Schaltwelle gemäss Figur 6;
- **Figur 10**: eine perspektivische Ansicht des erfindungsgemässen Ausführungsbeispiels einer Schaltwelle mit Rastierungshülse gemäss der Prinzipskizze aus Figur 3;
- **Figur 11**: eine weitere perspektivische Ansicht der Schaltwelle gemäss Figur 10;
- **Figur 12**: eine Vorderansicht der Schaltwelle gemäss Figur 10;
- **Figur 13**: eine Draufsicht der Schaltwelle gemäss Figur 10;
- **Figur 14**: eine perspektivische Ansicht eines weiteren erfindungsgemässen Ausführungsbeispiels einer Schaltwelle gemäss den Verläufen aus Figur 5;
- **Figur 15**: eine weitere perspektivische Ansicht der Schaltwelle gemäss Figur 14;
- **Figur 16**: eine Vorderansicht der Schaltwelle gemäss Figur 14;
- **Figur 17**: eine Draufsicht der Schaltwelle gemäss Figur 14.

### AUSFÜHRUNGSBEISPIELE

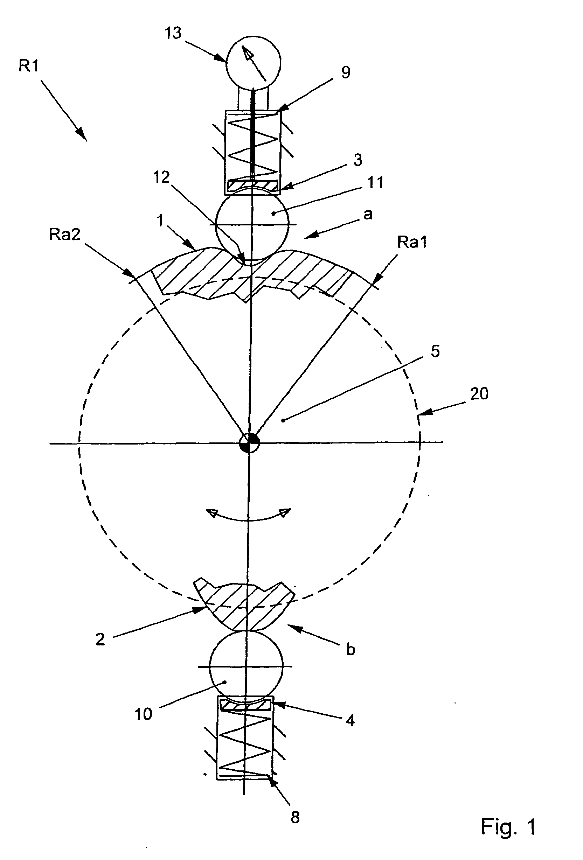

Figur 1 zeigt einen prinzipiellen Aufbau einer erfindungsgemässen Rastiervorrichtung R1. Eine Schaltkontur der Rastiervorrichtung R1 ist aus zwei Teilschaltkonturen, nämlich einer Neutralrastierkontur 1 und einer Gangrastierkontur 2 gebildet. Diese sind gegenüberliegend auf einem Umfang 20 angeordnet. Die Teilschaltkonturen stehen so miteinander in Wirkverbindung, dass sie gekoppelte Bewegungen ausführen. Der Neutralrastierkontur 1 ist ein erstes Rastelement 3 zugeordnet. Analog ist der Gangrastierkontur 2 ein zweites Rastelement 4 zugeordnet. Das erste Rastelement 3 besteht aus einer Kugel 11, die durch ein Federelement 9 federkraftbeaufschlagt ist. Die Neutralrastierkontur 1 weist eine Mulde 12 auf, in diese greift die Kugel 11. Wenn sich die Kugel 11 in dieser Mulde 12 befindet, ist das Getriebe in Neutralstellung. In Schaltrichtung läuft die Neutralrastierkontur 1 in konstanten Radien Ra aus. Im Gegensatz dazu ist die Gangrastierkontur 2 leicht ballig oder eben, aber ohne Vertiefung ausgebildet.

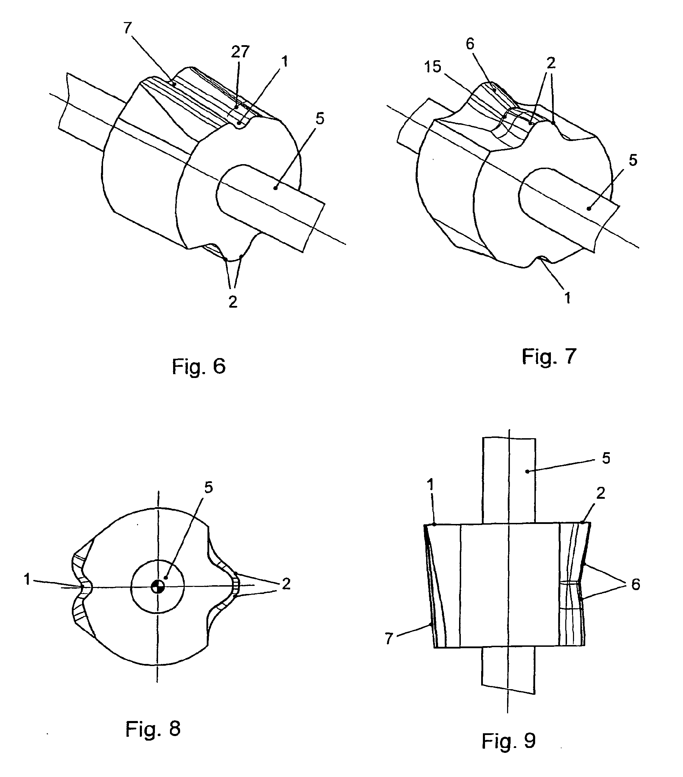

Teilschaltkonturen, die diesem Ausführungsbeispiel entsprechen, sind in den Figuren 6 bis 9 gezeigt. So weist die Teilschaltkontur 1 eine Wählrückführrampe 7, die als Vertiefung ausgeführt ist, auf. Eine Wählrückführrampe 6 an der Teilschaltkontur 2 ist als Auswölbung mit einer Einschnürung 15 ausgebildet.

Dem ersten Rastelement 3 ist ein Messelement 13 zugeordnet. Dieses ist vorzugsweise als Messsensor ausgebildet.

Die Funktionsweise der vorliegenden Erfindung ist:
Bei einer Wähl- oder Schaltbewegung erfährt das Rastelement 3 einen Hub. Dieser kommt dadurch zustande, dass das Rastelement 3 aus der Mulde 12 entlang der Neutralrastierkontur 1 in einer Schaltgasse 27, die beispielhaft in Figur 6 eingezeichnet ist, bis in einen Rastierbereich 28 läuft.

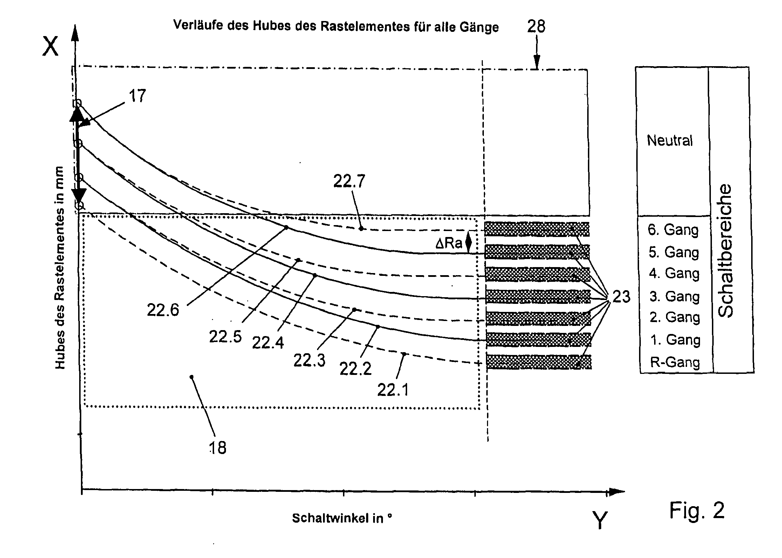

Figur 2 zeigt ein Diagramm, in dem in y-Richtung die Schaltwinkel gegenüber dem Hub des Rastelementes R1 in x-Richtung aufgetragen sind. Daraus ergeben sich für die einzelnen Gänge die dargestellten Hub-Verläufe 22.1 bis 22.7.

Der Rastierbereich 28 ist in mehrere Unterbereiche 23, die den einzelnen Schaltzuständen zugeordnet sind, unterteilt.

Ausgehend von einer Linie 17, die den Neutralbereich in der Mulde 12 darstellt erstrecken sich die Hub-Verläufe 22.1 bis 22.7 über einen Bewegungsbereich 18 bis in seinen Unterbereich 23 im Rastierbereich 28.

Die Unterbereiche des Rastierbereichs können auf der Schaltkontur ohne festen Zusammenhang verteilt sein. Kennzeichnend für einen Rastierbereich und seine Unterbereiche ist, dass das Rastelement im Rastierbereich einen konstanten Hub erfährt.

Im Rastierbereich 28 im Diagramm sind die Hub-Verläufe 22.1 bis 22.7 als Geraden ausgebildet, die jeweils einen definierten Abstand ΔRa zueinander aufweisen.

In anderen Ausführungsbeispielen können die einzelnen Abstände auch unterschiedliche Werte aufweisen.

Die Ausbildung der Hub-Verläufe 22.1 bis 22.7 als Geraden im Rastierbereich 28 sagt aus, dass sich das Rastelement 3 jetzt im Bereich einer Schaltgasse 27 befindet, in dem diese einen konstanten definierten Radius Ra aufweist, der einem Schaltzustand zugeordnet ist. Jetzt ist eine sichere Detektion des Schaltzustandes über eine Auswerteelektronik möglich.

Als Ereignis, mit dessen Eintreten der Auswerteelektronik signalisiert wird, dass sich das Rastelement 3 im Rastierbereich 28 befindet und eine sichere Detektion des Schaltzustand möglich ist, kann beispielsweise das Erreichen eines bestimmten Schaltwinkels, das Erreichen eines konstanten Hubes für Ra bzw. Beibehalten dieses Hubes für Ra innerhalb einer festgelegte Zeiteinheit als Kriterium dienen.

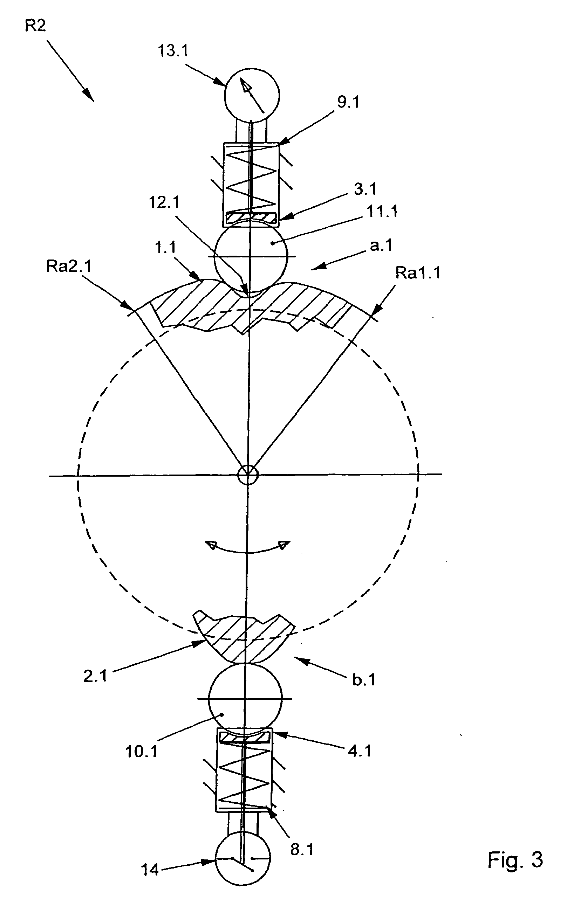

Figur 3 zeigt eine Prinzipskizze eines weiteren Ausführungsbeispiels einer erfindungsgemässen Rastiervorrichtung R2. Diese entspricht im Wesentlichen der Rastiervorrichtung R1, weist aber zusätzlich einen Schalter 14, der dem Rastelement 4 zugeordnet ist, auf.

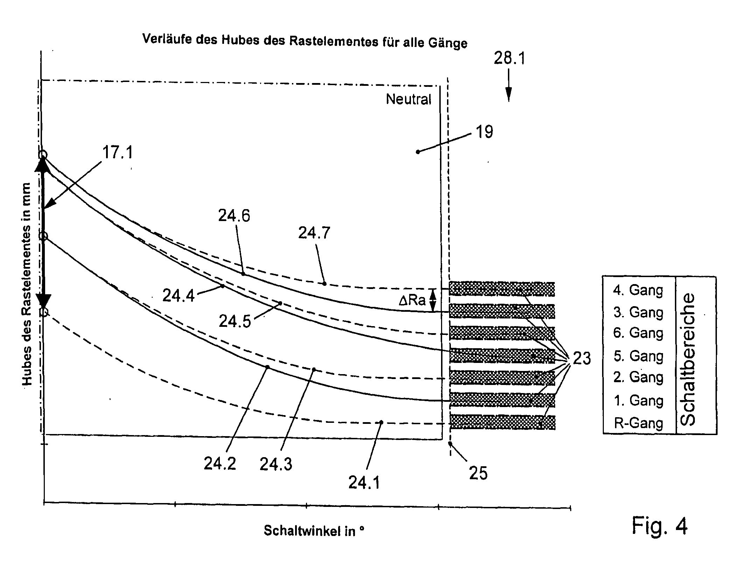

Die Funktionsweise dieses Ausführungsbeispiels ist folgende:
Der Schalter 14 schliesst, wenn mit dem Rastelement 4 und der Gangrastierkontur 2 eine Schaltposition bzw. ein Gang rastiert ist. Also sich das Rastelement 3.1 im Rastierbereich 28.1 bzw. einem Unterbereich 23 befindet. Dieses Ereignis wird im Diagramm in Figur 4 beispielhaft für "Gang 3" durch eine Linie 25 markiert. Links von der Linie 25 befindet sich deshalb ein Neutralbereich 19, da noch kein Gang eingelegt, bzw. rastiert ist. Erst bei geschlossenem Schalter 14 als Indikatorschaltzustand des Schalter 14, wird von Auswerteelektronik nach dem bereits beschriebenen Prinzip der Schaltzustand des Getriebes detektiert.

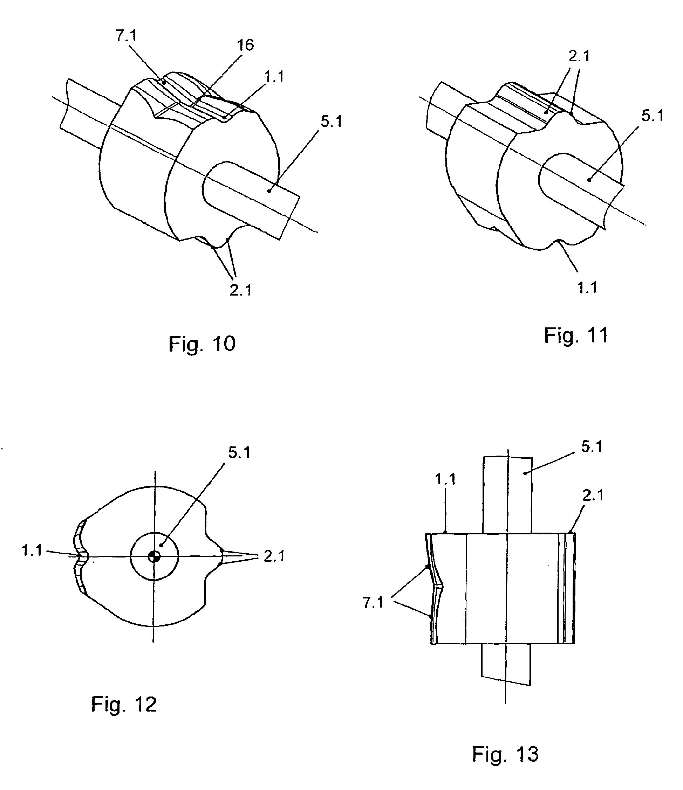

Teilschaltkonturen 1.1 und 2.1 und eine Schaltwelle 5.1, die sich für solche Anwendungen eignen, werden in den Figuren 10 bis 13 gezeigt. Vorzugsweise weist die Neutralrastierkontur 1.1 eine Wählrückführrampe 7.1 und eine Einschnürung 16, die sich über die gesamte Neutralrastierkontur 1.1 erstreckt, auf.

In einem weiteren erfindungsgemässen Ausführungsbeispiel sollen nicht alle einzelnen Schaltzustände detektiert, sondern nur eine Unterscheidung zwischen Rückwärtsgang oder Neutralstellung getroffen werden. Ein Anwendungsgebiet dieses Ausführungsbeispiels können Funktionen, die an einen bestimmten Schaltzustand, wie bspw. "Rückfahrscheinwerfer" gebunden sind, oder Fahrzeuge mit Start-Stopp-Automatik sein.

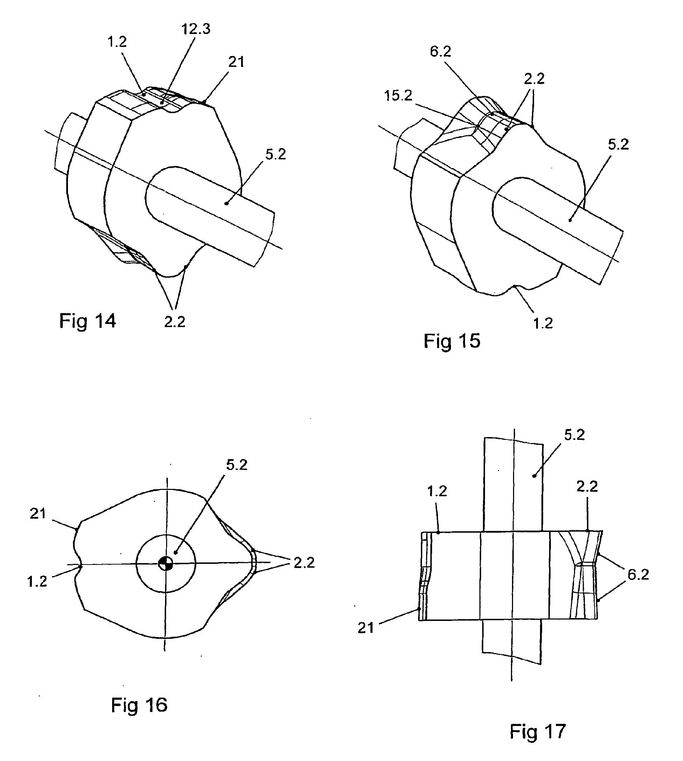

Dazu wird eine erfindungsgemässe Schaltkontur gemäss den Figuren 14 bis 17 mit einer Schaltwelle 5.2 und eine Neutralrastierkontur 1.2 und einer Gangrastierkontur 2.2 ausgebildet. Die Gangrastierkontur 2.2 und eine mittig liegende Wählrückführrampe 6.2 sind durch eine Einschürung 15.2 jeweils in zwei Bereiche getrennt.

Alle Neutralpositionen in der einer Mulde 12.3 weisen ein annähernd gleiches Niveau auf.

Auch alle Schaltgassen bzw. Schaltbereiche der Vorwärtsgänge 1 bis n werden annähernd auf ähnliche Radien gelegt. Deshalb weist die Neutralrastierkontur 1.2 auch nur eine Erhöhung 21 auf, die den Schaltbereich des Rückwärtsganges darstellt. Die Erhöhung 21 weist einen definierten Abstand zu den anderen Schaltbereichen der Neutralrastierkontur 1.2 auf. Dadurch ergibt sich eine eindeutige Abgrenzung für die Schaltbereiche "neutral" und "R-Gang".

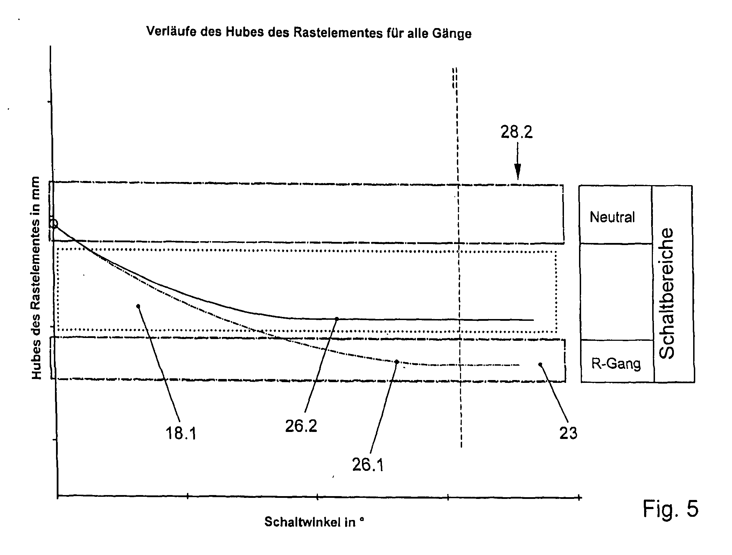

Bei Betrachtung der Hub-Verläufe 26.1 und 26.2 in Figur 5 zeigt sich, dass ebenfalls ein Bewegungsbereich 18.1, der bei allen Schaltbewegungen durchlaufen wird und ein Rastierbereich 28.2 vorhanden ist. Da der Hub-Verlauf 26.1 unterhalb des Bewegungsbereichs 18.1 endet, kann von der Auswertelektronik eindeutig der gewählte Rückwärtsgang erkannt werden.

Über den Hub-Verlauf 26.2, der im Bewegungsbereich 18.1 liegt, kann nur ausgesagt werden, dass er aus einer Wählbewegung, mit der einer der Vorwärtsgänge 1 bis n gewählt wurde, resultiert.

Für alle Hub-Verläufe, die über dem Bewegungsbereich 18.1 liegen, wie der Kreis 30, erkennt die Auswerteelektronik, dass das Getriebe in Neutralstellung ist.

### Bezugszeichenliste

| | | | | | |
|---|---|---|---|---|---|
| 1 | Neutralrastierkontur | 34 | | 67 | |
| 2 | Gangrastierkontur | 35 | | 68 | |
| 3 | Rastelement | 36 | | 69 | |
| 4 | Rastelement | 37 | | 70 | |
| 5 | Schaltwelle | 38 | | 71 | |
| 6 | Wählrückführrampe | 39 | | 72 | |
| 7 | Wählrückführrampe | 40 | | 73 | |
| 8 | Federelement | 41 | | 74 | |
| 9 | Federelement | 42 | | 75 | |
| 10 | Kugel | 43 | | 76 | |
| 11 | Kugel | 44 | | 77 | |
| 12 | Mulde | 45 | | 78 | |
| 13 | Messelement | 46 | | 79 | |
| 14 | Schalter | 47 | | | |
| 15 | Einschnürung | 48 | | | |
| 16 | Einschnürung | 49 | | | |
| 17 | Linie Neutralbereich | 50 | | | |
| 18 | Neutralbereich | 51 | | | |
| 19 | Bewegungsbereich | 52 | | | |
| 20 | Umfang | 53 | | | |
| 21 | Erhöhung | 54 | | | |
| 22 | Hub-Verlauf | 55 | | | |
| 23 | Unterbereich | 56 | | | |
| 24 | "Schalter-Geschlossen" | 57 | | | |
| 25 | Linie | 58 | | R1 | Rastiervorrichtung |
| 26 | Verlauf | 59 | | R2 | Rastiervorrichtung |
| 27 | Schaltgasse | 60 | | Ra | Radius Schaltstellung |
| 28 | Rastierbereich | 61 | | x | x-Richtung |
| 29 | | 62 | | y | y-Richtung |
| 30 | | 63 | | ΔRa | Abstand |
| 31 | | 64 | | | |
| 32 | | 65 | | | |
| 33 | | 66 | | | |

## Patentansprüche

1. Rastiervorrichtung (R1, R2), insbesondere für eine Schaltwelle (5) eines Schaltgetriebes, mit einer Schaltkontur, die mit einem ersten Rastelement (3, 3.1) in Wirkverbindung steht, wobei die Schaltkontur mit einem zweiten Rastelement (4, 4.1) in Wirkverbindung steht, wobei dem ersten Rastelement (3, 3.1) ein Messelement (13) zugeordnet ist,
**dadurch gekennzeichnet,**
**dass** das Messelement (13) ein Wegaufnehmer ist, wobei die Schaltkontur zumindest einen Rastierbereich (28, 28.1, 28.2) aufweist, in dem einem von mehreren definierten Radien (Ra) genau einer von mehreren Schaltzuständen zugeordnet ist, wobei zumindest einer der Rastierbereiche (28, 28.1. 28.2) durch einen Srhaftwinkelbereich definiert ist, dass das erste Rastelement (3, 3.1) einer Neutralrastierkontur (1, 1.1, 1.2) und das zweite Rastelement (4, 4.1) einer Gangrastierkontur (2, 2.1, 2.2) zugeordnet ist.

2. Rastiervorrichtung nach Anspruch 1, **dadurch gekennzeichnet, dass** das Messelement (13) einen Hub des ersten Rastelementes (3, 3.1) erfasst.

3. Rastiervorrichtung nach einem den Ansprüchen 1 oder 2, **dadurch gekennzeichnet, dass** zumindest einer der Rastierbereiche (28, 28.1, 28.2) durch eine Indikatorgrösse erkennbar ist

4. Rastiervorrichtung nach Anspruch 3, **dadurch gekennzeichnet dass** die Indikatorgrösse ein Schaltwinkel und/oder ein Zeitintervall und/oder das Gleichbleiben eines Hubwertes innerhalb eines Zeitintervalls und/oder ein indikator-Schaltzustand ist.

5. Rastiervorrichtung nach einem der Ansprüche 1 bis 4, **dadurch gekennzeichnet, dass** dem zweiten Rastelement (4, 4.1) ein Schalter (14) zugeordnet ist.

6. Rastiervorrichtung nach Anspruch 5, **dadurch gekennzeichnet, dass** die Gangrastierkontur (2, 2.1, 2.2) und die Neutralrastierkontur (1, 1.1, 1.2) ausgebildet sind, so dass das zweite Rastelement (4, 4.1) nur dann einen Indikator-Schaltzustand des Schalters (14) bewirkt, wenn sich das erste Rastelement (3, 3.1) auf zumindest einem der Rastierbereich (28, 28.1, 28.2) befindet.

7. Verfahren zum Detektieren eines Schaltzustandes eines Schaltgetriebes, der mittels einer Rastiervorrichtung (R1, R2) nach den Ansprüchen 1 bis 6 mit einer Schaltkontur (1, 1.1, 1.2, 2, 2.1, 2.2), einem ersten Rastelement (3, 3.1) und einem zweiten Rastelement (4, 4.1) festgelegt wird, wobei ein Hub des ersten Rastelelements (3, 3.1) gemessen wird.

8. Verfahren nach Anspruch 7, **gekennzeichnet durch** Vergleichen des gemessen Hubes des ersten Rastelements (3, 3.1) mit hinterlegten Hubwerten und Bestimmen des Schaltzustandes in Abhängigkeit von dem Vergleich.

9. Verfahren nach Anspruch 7 oder 8, **gekennzeichnet durch** Detektieren eines Indikator-Schaltzustandes eines Schalters (14), der dem zweiten Rastelement (4, 4.1) zugeordnet ist, und Erkennen, ob das erste Rastelement (4, 4.1) bereits einen Rastierbereich (28, 28.1, 28.2) erreicht hat in Abhängigkeit von dem detektierten Indikator-Schaltzustand.

## Claims

1. A locking device (R1, R2), in particular for a gearshift shaft (5) of a manual transmission, with a shift contour which is in an operative connection with a first latch element (3, 3.1), the shift contour being in an operative connection with a second latch element (4, 4.1), a measuring element (13) being associated with the first latch element (3,3.1),
**characterised in that**
the measuring element (13) is a displacement sensor, the shift contour having at least one locking region (28, 28.1, 28.2) in which precisely one of several shift states is associated with one of several defined radii (Ra), at least one of the locking regions (28, 28.1, 28.2) being defined by a shift angle range, **in that** the first latch element (3, 3.1) is associated with a neutral locking contour (1, 1.1, 1.2) and the second latch element (4, 4.1) with a gear locking contour (2, 2.1, 2.2).

2. A locking device according to Claim 1, **characterised in that** the measuring element (13) detects a stroke of the first latch element (3, 3.1).

3. A locking device according to one of Claims 1 or 2, **characterised in that** at least one of the locking regions (28, 28.1, 28.2) can be recognised by an indicator variable.

4. A locking device according to Claim 3, **characterised in that** the indicator variable is a shift angle and/or a time interval and/or the remaining-constant of a stroke value within a time interval and/or an indicator shift state.

5. A locking device according to one of Claims 1 to 4, **characterised in that** a switch (14) is associated with the second latch element (4, 4.1).

6. A locking device according to Claim 5, **characterised in that** the gear locking contour (2, 2.1, 2.2) and the neutral locking contour (1, 1.1, 1.2) are formed so that the second latch element (4, 4.1) only brings about an indicator shift state of the switch (14) when the first latch element (3, 3.1) is on at least one of the locking region (28, 28.1, 28.2).

7. A method for detecting a shift state of a manual transmission which is fixed by means of a locking device (R1, R2) according to Claims 1 to 6 with a shift contour (1, 1.1, 1.2, 2, 2.1, 2.2), a first latch element (3, 3.1) and a second latch element (4, 4.1), a stroke of the first latch element (3, 3.1) being measured.

8. A method according to Claim 7, **characterised by** comparing the measured stroke of the first latch element (3, 3.1) with stored stroke values and determining the shift state dependent on the comparison.

9. A method according to Claim 7 or 8, **characterised by** detecting an indicator shift state of a switch (14) which is associated with the second latch element (4, 4.1), and recognising whether the first latch element (4, 4.1) has already reached a locking region (28, 28.1, 28.2) dependent on the detected indicator shift state.

## Revendications

1. Dispositif de blocage (R1, R2), en particulier pour un arbre de changement de vitesse (5) d'une boite de vitesse, avec un contour de commutation qui est en liaison de fonctionnement avec un premier élément de blocage (3, 3.1), le contour de commutation étant en liaison de fonctionnement avec un deuxième élément de blocage (4, 4.1), au premier élément de blocage (3, 3.1) étant associé un élément de mesure (13),
**caractérisé par le fait**
**que** l'élément de mesure (13) est un enregistreur de trajet, le contour de commutation présentant au moins une zone de blocage (28, 28.1, 28.2) dans laquelle est associé à l'un de plusieurs rayons (Ra) définis exactement l'un parmi plusieurs états de changement de vitesse, au moins l'une des zones de blocage (28, 28.1, 28.2) étant définie par une zone d'angle de changement de vitesse, que le premier élément de blocage (3, 3.1) est associé à un contour de blocage neutre (1, 1.1, 1.2) et que le deuxième élément de blocage (4, 4.1) est associé à un contour de blocage de marche (2, 2.1, 2.2).

2. Dispositif de blocage selon la revendication 1, **caractérisé par le fait que** l'élément de mesure (13) détecte une course du premier élément de blocage (3, 3.1).

3. Dispositif de blocage selon l'une des revendications 1 ou 2, **caractérisé par le fait qu'**au moins l'une des zones de blocage (28, 28.1, 28.2) est reconnaissable par une grandeur d'indicateur.

4. Dispositif de blocage selon la revendication 3, **caractérisé par le fait que** la grandeur d'indicateur est un angle de changement de vitesse et/ou un intervalle de temps et/ou la constance d'une valeur de course dans un intervalle de temps et/ou un état de commutation d'indicateur.

5. Dispositif de blocage selon l'une des revendications 1 à 4, **caractérisé par le fait qu'**au deuxième élément de blocage (4, 4.1) est associé un commutateur (14).

6. Dispositif de blocage selon la revendication 5, **caractérisé par le fait que** le contour de blocage de marche (2, 2.1, 2.2) et le contour de blocage neutre (1, 1.1, 1.2) sont réalisés de sorte que le deuxième élément de blocage (4, 4.1) ne provoque un état de commutation d'indicateur de l'interrupteur (14) que lorsque le premier élément de blocage (3, 3.1) se situe au moins dans l'une des zones de blocage (28, 28.1, 28.2).

7. Procédé pour détecter un état de changement de vitesse d'une boite de vitesse qui est fixé à l'aide d'un dispositif de blocage (R1, R2) selon les revendications 1 à 6 avec un contour de commutation (1, 1.1, 1.2 2, 2.1, 2.2), un premier élément de blocage (3, 3.1) et un deuxième élément de blocage (4, 4.1), une course du premier élément de blocage (3, 3.1) étant mesurée.

8. Procédé selon la revendication 7, **caractérisé par** la comparaison de la course mesurée du premier élément de blocage (3, 3.1) avec les valeurs de course mémorisées et la détermination de l'état de changement de vitesse en fonction de la comparaison.

9. Procédé selon la revendication 7 ou 8, **caractérisé par** la détection d'un état de commutation d'indicateur d'un commutateur (14) qui est associé au deuxième élément de blocage (4, 4.1) et la reconnaissance de si le premier élément de blocage (4, 4.1) a déjà atteint une zone de blocage (28, 28.1, 28.2) en fonction de l'état de commutation d'indicateur détecté.
